# EUROPÄISCHE PATENTANMELDUNG

(11) **EP 2 384 879 A1**
(43) Veröffentlichungstag der Anmeldung: **09.11.2011**
(21) Anmeldenummer: 11164385.4
(22) Anmeldetag: 02.05.2011
(51) Int. Cl.: B29C 47/20, B29C 47/06, B29C 47/24, B21C 23/10

(54) **Verfahren und Vorrichtung zum Umformen von Metallen und Kunststoffen, sowie rohr- oder schlauchförmiges Produkt**

(30) Priorität: 04.05.2010 DE 102010028537; 23.11.2010 DE 102010061794
(71) Anmelder: Sausner, Andreas, 60389 Frankfurt (DE)
(72) Erfinder: Sausner, Andreas, 60389 Frankfurt (DE)
(74) Vertreter: Dreiss

(57) **Zusammenfassung**

Die vorliegende Erfindung betrifft eine Umformvorrichtung (10) und ein Verfahren zum Umformen, wobei ein auf Umformtemperatur erwärmtes Rohmaterial längs einer Vorschubrichtung (26) mindestens einmal durch eine Matrize (22) gedrückt oder gezogen wird. Während des Umformens wird dabei die Matrize (22) oder zumindest Teilbereiche (45) der Matrize und/oder das Rohmaterial um eine in Vorschubrichtung (26) verlaufenden Längsachse gedreht.

## Beschreibung

Die Erfindung betrifft ein Verfahren zum Umformen von Metallen und Kunststoffen nach dem Oberbegriff von Anspruch 1. Außerdem ist Teil der Erfindung eine Umformvorrichtung nach dem Oberbegriff des Anspruchs 8.

Umformen ist ein Oberbegriff für Fertigungsverfahren, in denen Metalle oder thermoplastische Kunststoffe gezielt plastisch in eine andere Form gebracht werden. Bei einer Anwendung von umgeformten Werkstoffen ist unter anderem zu berücksichtigen, dass Metalle und thermoplastische Kunststoffe eine während des Umformens in Bearbeitungsrichtung ausgebildete Orientierung von Kristallen bzw. Molekülketten (Faserichtung) aufweisen, deren Ausrichtung einen Einfluss auf die Festigkeit des erzeugten Werkstoffs hat (mechanische Betriebsfestigkeit). Bekanntermaßen ist die mechanische Betriebsfestigkeit eines Materials in Richtung der Materialfasern am größten. Bei einer Beurteilung der mechanischen Betriebsfestigkeit ist die Dicke des Materials, insbesondere in den durch anliegende Kräfte stark belasteten Bereichen, zusätzlich zu berücksichtigen.

So sind thermoplastische Kunststoffe (z.B. PVC Polyvinylchlorid, PE Polyethylen, PP Polypropylen, PA Polyamid, PET Polyethylenterephthalat, etc. ) in der Regel aus langen, im Wesentlichen linearen Kohlenwasserstoffketten aufgebaut, die nur durch eine schwache physikalische Bindung miteinander verbunden sind. Thermoplastische Kunststoffe lassen sich in einem bestimmten Temperaturbereich beliebig verformen.

Metallische Werkstoffe sind aus Kristalliten aufgebaut. Kristallite sind Metallfasern und entstehen, wenn Kristalle in einer Schmelze erstarren, in der sie von umliegenden Kristallen am freien Wachstum gehindert werden. Sie erstarren zu einem polykristallinen Gefüge. Plastische Formänderungen metallischer Werkstoffe erfolgen durch Fließen auf kristallographisch bevorzugten Gleitebenen und in bevorzugten Gleitrichtungen innerhalb der Kristallite. Bestimmte Umformverfahren können metallische Werkstoffe bei einer bestimmten Umformtemperatur bearbeiten.

So können bekanntermaßen durch Umformverfahren bspw. metallische Werkstoffe durch ein Strangpressverfahren zu Röhren oder thermoplastische Kunststoffe durch ein im Wesentlichen analogen Verfahren, einer sog. Extrusion, zu flexiblen Schläuchen umgeformt werden.

Im Strangpressverfahren wird ein auf Umformtemperatur erwärmter Rohmaterialblock mit einem Stempel durch ein als Matrize ausgebildetes fixiertes Verformungswerkzeug gedrückt. Dabei wird der Rohmaterialblock durch einen Rezipienten - einem sehr dickwandigen Führungszylinder - umschlossen. Der Querschnitt des erzeugten Pressstrangs wird durch die Form des Verformungswerkzeugs bestimmt. Durch unterschiedlich geformte Dorne können dabei Hohlräume für die Röhre erzeugt werden. Die Metallfasern werden durch das Strangpressverfahren im Wesentlichen in eine Vorschubrichtung, also in Richtung einer Längsachse des umgeformten Rohmaterials, ausgerichtet.

Beim Extrusionsverfahren werden thermoplastische Kunststoffe ebenfalls durch ein als Matrize ausgebildetes fixiertes Verformungswerkzeug gepresst. Zuvor wird ein Kunststoffgranulat in einer Schneckenpresse (sog. Extruder) mittels einer Heizvorrichtung und innerer Reibung aufgeschmolzen und homogenisiert und ein Druck zum Pressen des aufgeschmolzenen Kunststoffs durch die Matrize aufgebaut. Durch das Extrusionsverfahren stellt sich durch eine kinematische Viskosität, einer Kanalhöhe und Kanallänge der Schneckenpresse ein Strömungsprofil ein, in dem die Stromlinien meist parallel verlaufen und es zwischen den Stromlinien nur zu einem geringen lateralen Stoffaustausch kommt. Dem zufolge richten sich die Kohlenwasserstoffketten im Wesentlichen parallel zu den Stromlinien in Richtung der Vorschubrichtung, also zur Längsachse des umgeformten thermoplastischen Kunststoffs aus.

Die durch das oben beschriebene Strangpress- bzw. Extrusionsverfahren erzeugten Röhren bzw. Schläuche sind also durch Materialfasern gekennzeichnet, die im Wesentlichen in Richtung der Längsachse des umgeformten Rohmaterials (Röhre, Schlauch) ausgerichtet sind. Dadurch weisen die so erzeugten Röhren bzw. Schläuche in Richtung der Längsachse wesentlich andere mechanische Eigenschaften auf als in Umlaufrichtung (Querrichtung). Es ist bekannt, dass die Röhren- bzw. Schlauchwandungen in Längsrichtung eine andere, höhere Festigkeit aufweisen als in Umlaufrichtung. Das Verhältnis der Festigkeit in Querrichtung zur Längsrichtung kann bis zu 1 : 5 betragen. Die mechanische Festigkeit in Umlaufrichtung ist also zumindest in einem statischen Bereich wesentlich schlechter als in Längsrichtung. Ein ähnliches Verhältnis ergibt sich bei der Gegenüberstellung einer Durchmesseränderung zu einer Längenänderung bei Druck im Schlauch bzw. im Rohr. Bei hohem Druck im Schlauch bzw. Rohr ergibt sich eine merklich größere relative Veränderung des Durchmessers gegenüber der relativen Längenänderung, als dies bei einer Annahme einer isotropischen Festigkeitsvereilung gegeben wäre. Im Fall von dynamischer Belastung (z.B. eine schwellende Druckbelastung) ist sogar auch eine merkliche Verschlechterung der Festigkeit in Längsrichtung feststellbar.

Bei einer Anwendung einer durch das bekannte Verfahren produzierten Röhre oder Schlauchs bspw. als Druckleitung in einem Bremssystem eines Kraftfahrzeugs (sog. Bremsleitung), bedeutet dies nachteiligerweise, dass die Druckleitung bei Überdruck oder Ermüdung bzw. Alterung des Materials relativ schnell in Längsrichtung aufreißen kann. Die grundsätzlich vorhandene Festigkeit des Materials kann nicht optimal ausgenutzt werden. Zur Kompensation dieses Verhaltens benötigt man eine höhere Wandstärke, um die nötige mechanische Betriebsfestigkeit in Umlaufrichtung zu erlangen. Dies erhöht jedoch die Herstellungskosten der Druckleitung und macht sie weniger flexibel.

Der vorliegenden Erfindung liegt daher die Aufgabe zugrunde, Röhren und Schläuche durch ein Umformverfahren herzustellen, wobei deren mechanische Betriebsfestigkeit in Umlaufrichtung der mechanischen Betriebsfestigkeit in Richtung der Längsachse der Röhren und Schläuche angepasst wird. Das Verfahren soll dazu preisgünstig sein.

Diese Aufgabe wird erfindungsgemäß dadurch gelöst, dass während des und/oder nach dem Umformen die Matrize oder zumindest Teilbereiche der Matrize und/oder das Rohmaterial um eine in Vorschubrichtung verlaufenden Längsachse gedreht wird.

Das Drehen der Matrize bzw. des Rohmaterials während des Umformens richtet die Materialfasern der so hergestellten Röhren oder Schläuche in einem Ausrichtungswinkel größer 0° zur Längsachse des umgeformten Rohmaterials aus. Das heißt, dass die Materialfasern nicht - wie bekannt - in Richtung der Längsachse verlaufen, sondern eher quer dazu. Die Drehgeschwindigkeit im Zusammenspiel mit der Vorschubgeschwindigkeit bestimmen dabei - nach dem Umformen - den Ausrichtungswinkel der Materialfasern zur Längsachse des umgeformten Materials. Das hat einerseits zum Vorteil, dass eine in Umlaufrichtung (Umfangsrichtung) im Rohr oder Schlauch auftretende Kraftkomponente (z.B. einer Druckkraft) im Wesentlichen entlang der Materialfasern wirken kann, wo die Belastbarkeit des Materials am größten ist. Dadurch kann die mechanische Festigkeit des umgeformten Materials besonders in Umlaufrichtung optimiert werden. Andererseits kann vorteilhafterweise durch Verändern der Drehgeschwindigkeit und/oder der Vorschaubgeschwindigkeit der Ausrichtungswinkel der Materialfasern individuell eingestellt werden, so wie es für den aktuell herzustellenden Gegenstand (z.B. eine Bremsleitung) am günstigsten ist.

Der günstigste Ausrichtungswinkel der Materialfasern kann bspw. durch Versuche in einem Messlabor festgestellt werden. Hierbei haben die Druckhöhe, Druckschwankungen, der Durchmesser der Röhren und Schläuche sowie deren Wandungsstärke und eine Betriebstemperatur einen besonderen Einfluss auf den optimalen Ausrichtungswinkel. Das Verändern des Ausrichtungswinkels der Materialfasern verändert eine Aufnahmemöglichkeit von Kraftkomponenten in Längs- und in Querrichtung des Materials. Das erfindungsgemäße Verfahren führt dazu, dass Wandungen der Röhren oder Schläuche dünner hergestellt werden können, da sie eine höhere mechanische Festigkeit in Umlaufrichtung aufweisen als beim herkömmlichen Verfahren. Druck- oder alterungsbedingte Risse, insbesondere in Längsrichtung der Rohre oder Schläuche, werden vermieden oder deren Auftreten zumindest zeitlich stark verzögert.

Beim erfindungsgemäßen Verfahren kann neben der Drehung der Matrize auch das Rohmaterial verdreht werden. Dies kann dadurch geschehen, dass das Rohmaterial durch Verdrehen einer Wandung des Führungszylinders der Umformvorrichtung für das Rohmaterial verdreht wird. Durch Adhäsions- und Reibungskräfte wird das Rohmaterial dabei mitverdreht. Natürlich können auch die Matrize und das Rohmaterial gleichzeitig verdreht werden. Dabei ist beachten, dass eine Relativbewegung zwischen der Matrize und des Rohmaterials erzeugt wird. Die Drehbewegungen der Matrize und des Rohmaterials können in eine gleiche Richtung mit unterschiedlichen Geschwindigkeiten stattfinden, die Drehbewegungen können aber auch gegenläufig sein. Denkbar ist auch, dass das Rohmaterial in sich verdreht wird, indem eine Seite des Werkstoffs eingespannt und eine zweite Seite verdreht wird.

Beim erfindungsgemäßen Umformverfahren können thermoplastische Kunststoffe durch Extrusion im Extruder oder Metalle durch Strangpressen in einer Strangpressvorrichtung oder Ziehen in einer Ziehvorrichtung verarbeitet werden. So kann bei einem Kunststoffschlauch bei hohem Druck auch die bekannte Durchmessererweiterung reduziert werden, wobei eine größere Längenausdehnung des Kunststoffschlauchs einher geht. Im Fall von dynamischer Belastung (schwellende Druckbelastung) wird die Festigkeit in Umlaufrichtung und auch in Längsrichtung erhöht.

Der Ausrichtungswinkel kann im Wesentlichen zwischen 1° und 89° gegenüber der Längsachse des umgeformten Rohmaterials liegen. Tests und Versuche haben jedoch gezeigt, dass optimale Verhältnisse geschaffen werden, wenn die Molekülketten beziehungsweise Kristalle des Rohmaterials bevorzugt in einem Ausrichtungswinkel von 35° bis 60° gegenüber der Längsachse des umgeformten Rohmaterials ausgerichtet werden.

Bei Verarbeiten von thermoplastischen Kunststoffen durch Extrusion kann das Verdrehen des Rohmaterials vorteilhafterweise auch dadurch realisiert werden, dass das Rohmaterial durch Leitschaufeln in einem vorbestimmten Winkel zur Matrize herangeführt wird. Dazu weist der Extruder in Vorschubrichtung vor der Matrize die Leitschaufeln auf. Die Leitschaufeln können dabei auch in sich verdreht sein oder können auch in ihrer Gesamtheit auf einer Längsachse des Extruders rotieren oder ähnlich dem Prinzip einer Knetmaschine arbeiten. Die Leitschaufeln können in einem Extruder mit und ohne drehbarer Matrize angeordnet sein. Sie verstärken das gewünschte Verdrehen des Rohmaterials.

In einer Weiterbildung des Umformverfahrens, insbesondere des Extrusionsverfahrens zur Herstellung von schlauchförmigen Produkten, ist es möglich, dass die schlauchförmigen Produkte eine mehrschichtige Produktwandung aufweisen. Dazu weist der Extruder zur Herstellung der mehrschichtigen schlauchförmigen Produkte beispielsweise eine Matrize mit konzentrisch angeordneten Ringöffnungen auf, durch die das Rohmaterial nacheinander in mehreren Schichten fließt und hieraus das mehrschichtige schlauchförmige Produkt erzeugt wird. Während der Herstellung wird, gemäß des erfindungsgemäßen Verfahrens, jede Schicht durch eine Drehvorrichtung innerhalb der Matrize relativ zueinander verdreht.

Durch unterschiedliche Drehgeschwindigkeiten und/oder Drehrichtungen kann dabei erreicht werden, dass die Ausrichtung der Molekülketten in den einzelnen Schichten der Produktwandung voneinander abweicht. In einer bevorzugten Ausgestaltung sind die Molekülketten in den einzelnen Schichten der Produktwandung relativ zueinander entgegengesetzt ausgerichtet. Dadurch kann die mechanische Festigkeit des umgeformten Materials in Umlaufrichtung im Gegensatz zur einschichtigen Ausführungsform des schlauchförmigen Produkts nochmals verbessert werden. Auch in Längsrichtung kann so die mechanische Festigkeit des schlauchförmigen Produkts erheblich verstärkt werden. Vorteilhaft liegen die Molekülketten in den Schichten spiegelbildlich bezüglich der Längsrichtung des schlauch- oder rohrförmigen Produktes.

Weiterhin ist vorteilhaft, dass mindestens eine Schicht der Produktwandung neben dem Material mit den ausgerichteten Molekülketten zusätzlich einen Füllstoff aus organischem oder anorganischem Material aufweist. Dabei ist es unwesentlich, ob die Produktwandung ein- oder mehrschichtig ist. Die Füllstoffe werden dem Material der einen Produktwandung mit den gegebenenfalls ausgerichteten Molekülketten beigemischt, mit dem Ziel, die mechanischen Eigenschaften (z.B. Steifigkeit) des schlauchförmigen Produkts sowie eventuell Farbeinstellungen zu verändern, um bspw. spezielle Kundenwünsche zu erfüllen. Dabei ist es auch möglich, dass mindestens eine vollständige Schicht der mehrschichtigen Produktwandung den Füllstoff aufweist. Der Füllstoff kann dabei faserförmig (z.B. aus Naturfasern, Steinfasern, Karbonfasern oder Glasfasern) oder globular (z.B. aus mineralischen Stoffen) ausgebildet sein.

Weitere Vorteile ergeben sich aus der nachfolgenden Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile, Merkmale und Einzelheiten der Erfindung ergeben sich aus den Unteransprüchen sowie der nachfolgenden Beschreibung, in der unter Bezugnahme auf die Zeichnung besonders bevorzugte Ausführungsbeispiele im Einzelnen beschrieben sind. Dabei können die in der Zeichnung dargestellten sowie in der Beschreibung und in den Ansprüchen erwähnten Merkmale jeweils einzeln für sich oder in beliebiger Kombination erfindungswesentlich sein.

In der Zeichnung zeigen:
- Figur 1: einen Extruder zum Umformen von thermoplastischen Kunststoff aus dem Stand der Technik in einem Längsschnitt;
- Figur 2: ein Ausschnitt eines mit dem Extruder von Figur 1 hergestellten Schlauchs;
- Figur 3: einen erfindungsgemäßen Extruder in einer ersten Ausführungsform in einem Längsschnitt;
- Figur 4: ein Ausschnitt eines mit dem Extruder von Figur 3 hergestellten Schlauchs;
- Figur 5: einen erfindungsgemäßen Extruder in einer zweiten Ausführungsform in einem Längsschnitt; und
- Figur 6: eine Wandung des Schlauchs gemäß Figur 4 im Detail.

In sog. Umformverfahren können bspw. metallische Werkstoffe durch ein Strangpress- oder Ziehverfahren zu Röhren oder thermoplastische Kunststoffe durch ein im Wesentlichen analogen Verfahren, einer Extrusion in einem Extruder, zu flexiblen Schläuchen umgeformt werden.

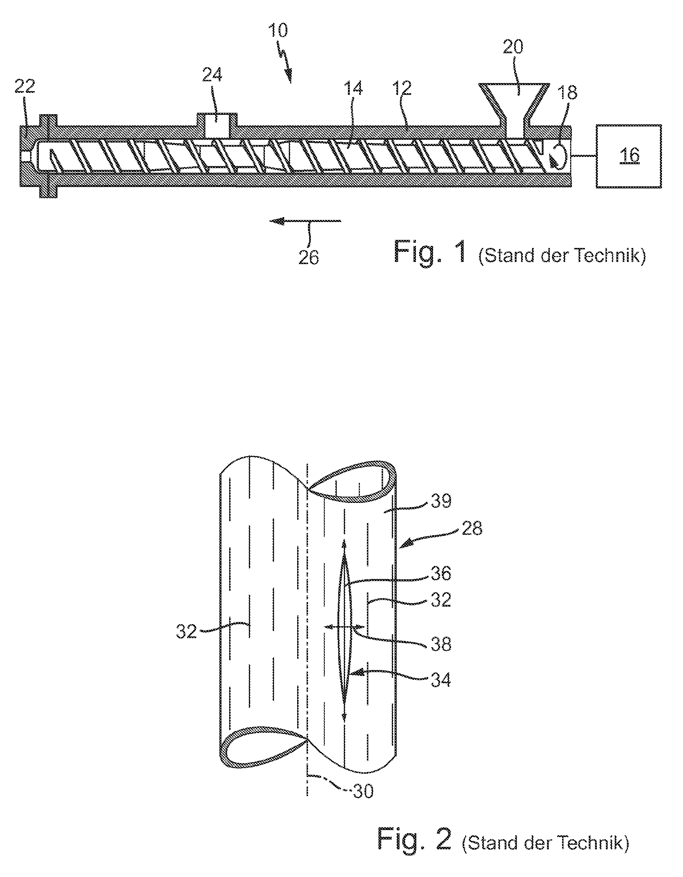

Figur 1 zeigt in einer schematischen Darstellung einen Extruder 10 aus dem Stand der Technik in einem Längsschnitt. Der Extruder 10 weist einen Führungszylinder 12 auf, der eine drehbar gelagerte Transportschnecke 14 umschließt. Der Schneckengang der Transportschnecke 14 ist in der Regel über den gesamten Verlauf nicht gleichmäßig ausgebildet. Die Transportschnecke 14 wird über eine Antriebseinrichtung 16 (z.B. ein Elektromotor) in Drehung versetzt (vgl. Bezugszeichen 18). Das bedeutet, dass die Drehgeschwindigkeit der Antriebseinrichtung 16 die Vorschubgeschwindigkeit des zu verarbeitenden Materials bestimmt. Zum Einfüllen eines thermoplastischen Kunststoffgranulats umfasst der Extruder 10 einen Einfülltrichter 20 und zum Ausstoßen des gefertigten, umgeformten Werkstücks eine Matrize 22. Die Form und Ausgestaltung der Matrize 22 bestimmen den Querschnitt gefertigten Werkstücks. Der Zylinder 12 und die Matrize 22 bilden dabei eine fest verbundene Einheit. Zum Entlüften des zu verarbeitenden Materials umfasst der Extruder 10 einen Abzugsstutzen 24.

Der Extruder 10 hat im Wesentlichen die Aufgabe, das Kunststoffgranulat zu fördern, bei gleichzeitiger Entlüftung zu verdichten, auf eine Umformtemperatur aufzuschmelzen und anschließend die erhitzte Kunststoffmasse unter Druck in einer Vorschubrichtung 26 der Matrize 22 zuzuführen und durch diese auszupressen. Das Aufheizen der Kunststoffmasse geschieht in der Regel durch ein Aufheizen des Zylinders 12, insbesondere im einem nach dem Einfülltrichter 20 anschließenden Bereich des Zylinders 12. Die unterschiedliche Ausbildung des Schneckengangs dient dazu, das Granulat zu verdichten, zu entlüften, zu homogenisieren und letztendlich um Druck zum Ausstoßen des Materials aufzubauen.

Es ist vorzugsweise vorgesehen, in dem Extruder 10 Kunststoffschläuche herzustellen. Figur 2 zeigt einen Ausschnitt eines mit dem Extruder 10 hergestellten Kunststoffschlauchs 28. Der im Extruder 10 verarbeitete thermoplastische Kunststoff weist lange Molekülketten 32 auf, die nach dem Umformen als Schlauch 28 - durch das Herstellungsverfahren bedingt - entlang einer Längsachse 30 ausgerichtet sind. Bekanntermaßen kann es bei hohem Innendruck des Schlauchs 28 leicht zu einem Aufplatzen des Schlauchs 28 parallel zur Längsachse 30 kommen (vgl. Bezugszeichen 34). Dies kommt daher, dass der Schlauch 28 lediglich in Längsrichtung, also in der Ausrichtung der Molekülketten 32 (Faserrichtung), eine besonders gute mechanische Festigkeit aufweist (vgl. Bezugszeichen 36). Quer zur Ausrichtung der Molekülketten 32 weist das Material dagegen nur eine schwache mechanische Festigkeit auf (vgl. Bezugszeichen 38). Die nachfolgend als Produktwandung genannte Wandung 39 des Schlauchs 28 kann also in Umlaufrichtung nur kleine Kraftkomponenten aufnehmen, in Längsrichtung sind die aufnehmbaren Kraftkomponenten wesentlich größer (vgl. Bezugszeichen 36 und 38).

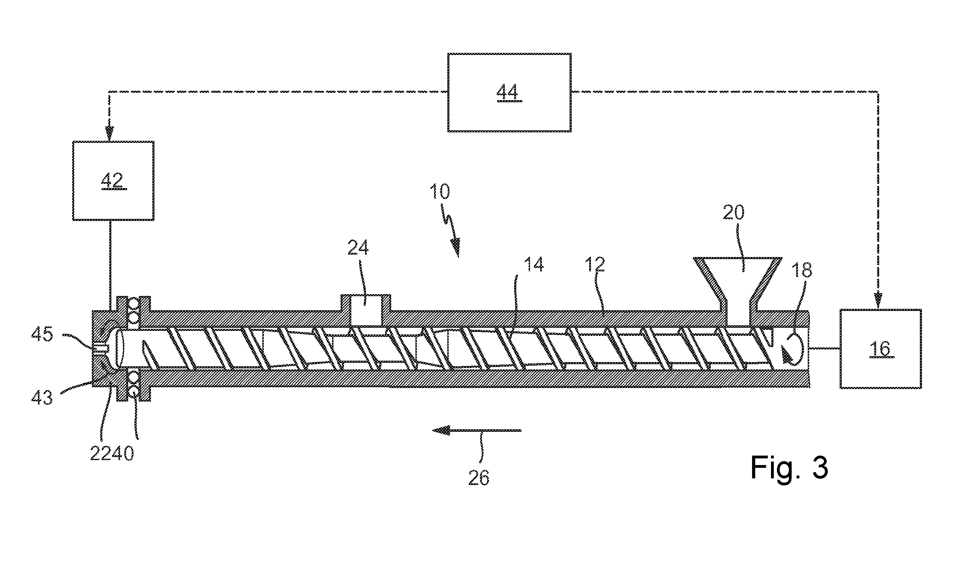

Figur 3 zeigt einen Extruder 10 zur Ausführung des erfindungsgemäßen Verfahrens in einem Längsschnitt in einer ersten Ausführungsform. Hierbei und für die nachfolgenden Figuren gilt, dass solche Elemente und die dazugehörenden Verfahrensbeschreibungen, welche funktionsäquivalent zu Elementen und Verfahrensbeschreibungen von Figur 1 oder 2 sind, nicht nochmals im Detail erläutert werden. Gleiche Bezugszeichen bezeichnen dabei jeweils gleiche Komponenten oder Funktionen. Der wesentliche Unterschied zum Extruder 10 von Figur 1 ist die durch ein Drehlager 40 (z.B. Gleit- oder Kugellager) drehbar auf dem Zylinder 12 gelagerte Matrize 22. Die Matrize 22 kann über eine Antriebseinrichtung 42 gedreht werden (vgl. Bezugszeichen 43). Eine Steuereinrichtung 44 steuert die Geschwindigkeit und die Drehrichtung der Antriebseinrichtungen 16 und 42. Die Antriebseinrichtungen 16 und 42 können auch zu einer gemeinsamen Antriebseinrichtung zusammengefasst sein ,die über verschiedene Getriebevorrichtungen die Transportschnecke 14 und die Matrize 22 unabhängig antreiben (nicht dargestellt).

Die Matrize 22 ist speziell zur Herstellung von Schläuchen ausgebildet. Deshalb weist die Matrize 22 einen in einem Zentrum der Matrizenöffnung zur Erzeugung eines Rohrinnenraums angeordneten Bolzen 45 auf, der drehbar gelagert und ebenfalls durch die Antriebseinrichtung 42 oder eine nicht dargestellte zusätzliche Antriebseinrichtung innerhalb der Matrizenöffnung antreibbar ist. Der Bolzen 45 ist bevorzugt in Drehrichtung der Matrize 22 mit der gleichen Winkelgeschwindigkeit anteibbar. Er könnte auch mit der Matrize 22 eine Einheit bilden und damit mit der Matrize 22 gemeinsam anteibbar sein. Die Winkelgeschwindigkeiten können bei getrennten Antrieben der Matrize 22 uns des Bolzens 45 auch unterschiedlich oder sogar gegenläufig sein. Der Bolzen 45 könnte natürlich auch feststehend, also nicht drehbar, sein.

Durch die drehbar am Zylinder 12 gelagerte Matrize 22 mit samt dem Bolzen 45 kann beim Umformverfahren das im Extruder 10 auf Umformtemperatur gebrachte Rohmaterial beim Austritt aus der Matrize 22 in sich verdreht werden. Das Rohmaterial wird dabei in sich verwunden. Die verschiedenen oben beschriebenen Antriebsmöglichkeiten des Bolzens 45 bieten unterschiedliche Möglichkeiten zur Aufbereitung und Verwindung des aus der Matrize 22 austretenden Materials, die wahlweise bei entsprechendem Bedarf zur Anwendung kommen können.

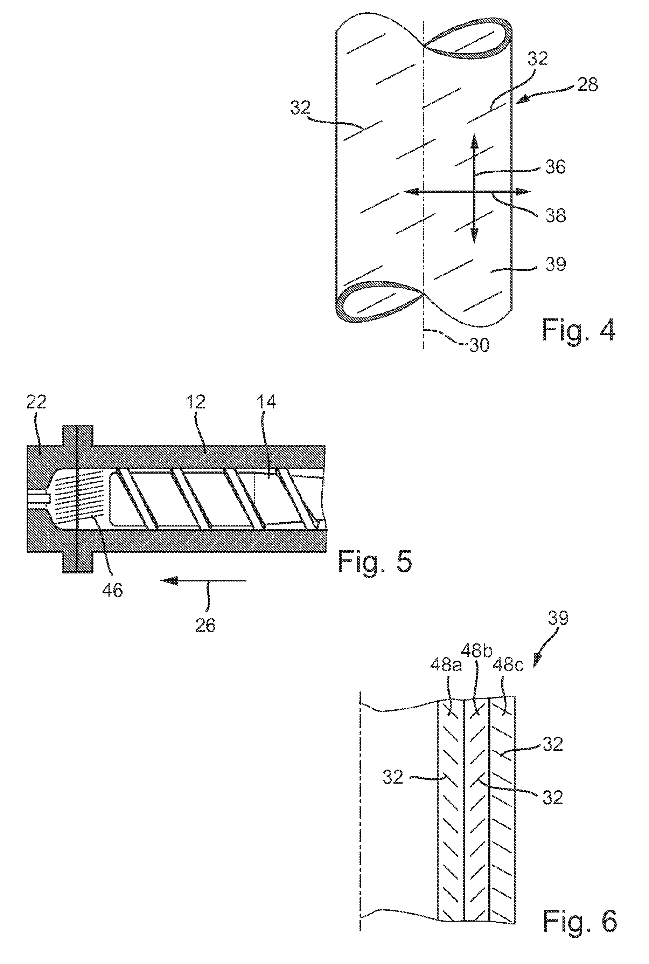

An Hand von Figur 4 werden Auswirkungen auf einen durch den Extruder 10 aus Figur 3 hergestellten Kunststoffschlauch 28 erläutert. Figur 4 zeigt einen Ausschnitt eines mit dem Extruder 10 aus Figur 3 hergestellten Kunststoffschlauchs 28. Das zusätzliche Drehen der Matrize 22 während des Umformvorgangs hat zur Folge, dass die Molekülketten 32 (Materialfasern) des so hergestellten Schlauchs 28 abweichend von der aus dem Stand der Technik bekannten Ausrichtung entlang der Längsachse 30 jetzt schräg oder annähernd quer zu Längsachse 30 ausgerichtet sind. Dadurch kommt es bei anstehendem Innendruck zu einer veränderten Kräfteverteilung an der Produktwandung 39 des Schlauchs 28.

Die Druckkräfte verteilen sich nach Anwendung des erfindungsgemäßen Umformverfahrens an der Produktwandung 39 annähernd gleichmäßig, das heißt, eine Druckkraftkomponente 38 in Umlaufrichtung ist annähernd gleichgroß, wie die Druckkraftkomponente 36 in Längsrichtung. Durch Einstellen der Vorschubgeschwindigkeit des Rohmaterials mittels der Antriebseinrichtung 16 und/oder das Verändern der Drehgeschwindigkeit der Matrize 22 mittels der Antriebseinrichtung 42 über die Steuereinrichtung 44 wird ein gewünschter Ausrichtungswinkel der Molekülketten 32 festgelegt. Durch dieses Verfahren kann die aufnehmbare Druckkraftkomponente 38 in Umlaufrichtung sogar größer als die aufnehmbare Druckkraftkomponente 36 in Längsrichtung sein. Dies erhöht wesentlich die mechanische Festigkeit des Schlauchs 28.

Figur 5 zeigt einen Extruder 10 zur Ausführung des erfindungsgemäßen Verfahrens in einem Längsschnitt in einer zweiten Ausführungsform. Die Matrize 22 ist in der zweiten Ausführungsform fest mit dem Zylinder 14 verbunden. Der Bereich im Innern des Zylinders weist in Vorschubrichtung unmittelbar vor der Matrize 22 Leitschaufeln 46 auf, die die auf Umformtemperatur erhitze Kunststoffmasse in einem vorbestimmten Winkel an die Matrize 22 heranführen. Die Leitschaufeln 46 können dabei zusätzlich in sich verdreht sein oder können auch in ihrer Gesamtheit auf einer Längsachse des Extruders 10 rotieren oder ähnlich dem Prinzip einer Knetmaschine arbeiten (nicht dargestellt). Die Leitschaufeln 46 verstärken das gewünschte Verdrehen des Rohmaterials vor dem Austritt aus der Matrize 22.

Wie im ersten Ausführungsbeispiel werden während des Umformvorgangs die Molekülketten 32 (Materialfasern) des so hergestellten Schlauchs 28 abweichend von der aus dem Stand der Technik bekannten Ausrichtung entlang der Längsachse 30 jetzt schräg oder sogar annähernd quer zu Längsachse 30 ausgerichtet. Dadurch kommt es bei anstehendem Innendruck im Wesentlichen auch hier zu einer Kräfteverteilung an der Produktwandung 39 des Schlauchs 28, so wie in Figur 4 gezeigt ist.

Im Folgenden werden weitere Ausführungsformen des Extruders 10 vorgestellt, mit denen das erfindungsgemäße Verfahren durchgeführt werden kann. Es kommt jeweils bei anstehendem Innendruck im Wesentlichen zu einer Kräfteverteilung an der Produktwandung 39 des hergestellten Werkstücks, so wie in Figur 4 gezeigt ist.

So können in einer weiteren nicht dargestellten Ausführungsform des Extruders 10 Leitschaufeln auch in Vorschubrichtung unmittelbar vor einer drehbaren Matrize (so wie in Figur 3 dargestellt) angeordnet sein. Die Leitschaufeln würden in diesem Fall die Drehwirkung der Matrize noch weiter unterstützen.

In einer weiteren nicht dargestellten Ausführungsform kann ein Zylinder des Extruders 10 mit samt der Transportschnecke relativ zur Matrize gedreht werden.

In einer weiteren nicht dargestellten Ausführungsform kann das Rohmaterial in sich verdreht werden, indem eine Seite des Werkstoffs eingespannt und eine zweite Seite verdreht wird. Dies kann innerhalb der Umformvorrichtung, aber auch direkt nach dem Austritt des Werkstoffs aus der Matrize erfolgen.

In einer weiteren nicht dargestellten Ausführungsform kann das Rohmaterial zunächst ohne Verdrehung aus der Matrize gedrückt und in einem anschließenden Prozessschritt in sich verdreht werden. Das Verfahren kann bevorzugt abschnittsweise durchgeführt werden, so dass der Werkstoff jeweils zu einem Teil aus der Matrize gedrückt und anschließend durch eine Verdrehvorrichtung in sich verdreht wird.

In einer weiteren Ausführungsform des Umformverfahrens, insbesondere des Extrusionsverfahrens, ist es möglich, dass die durch das Umformverfahren hergestellten schlauchförmigen Produkte 28 eine mehrschichtige Produktwandung 39 aufweisen. Figur 6 zeigt eine solche mehrschichtige Produktwandung 39 im Detail. Die dargestellte Produktwandung 39 weist dabei beispielhaft drei aneinander liegende Schichten 48a, 48b, 48c auf. Zur Herstellung des mehrschichtigen schlauchförmigen Produkts 28 weist der Extruder 10 bspw. eine Matrize 22 mit konzentrisch angeordneten Ringöffnungen auf, durch die das Rohmaterial nacheinander in mehreren Schichten fließt und hieraus schichtweise das mehrschichtige schlauchförmige Produkt 28 erzeugt wird. Während der Herstellung wird - gemäß des erfindungsgemäßen Verfahrens - jede Schicht 48 durch eine Drehvorrichtung innerhalb der Matrize 22 relativ zueinander verdreht.

Durch unterschiedliche Drehgeschwindigkeiten und/oder Drehrichtungen kann dabei erreicht werden, dass die Ausrichtung der Molekülketten 32 in den einzelnen Schichten 48a, 48b, 48c der Produktwandung 39 voneinander abweicht. So sind die Molekülketten 32 in den beiden Schichten 48a und 48b relativ zueinander entgegengesetzt ausgerichtet. Das bedeutet, dass die Molekülketten 32 der beiden Schichten 48a und 48b zwar annähernd den gleichen Winkel zu einer Längserstreckung der Produktwandung 39 aufweisen, jedoch in der Schicht 48a abfallend und in der Schicht 48b ansteigend ausgerichtet sind. Ein Winkel der Ausrichtung der Molekülketten 32 in der Schicht 48c weicht von der Ausrichtung der Molekülketten 32 in den Schichten 48a und b ab. Die Molekülketten 32 der Schicht 48c sind zur Längserstreckung der Produktwandung 39 flacher ausgerichtet.

Natürlich kann die Produktwandung 39 nahezu beliebig viele Schichten aufweisen. Genauso können die Ausrichtungswinkel der Molekülketten 32 beliebig - je nach Bedarf - ausgerichtet sein. Eine maximale Anzahl der möglichen Schichten sowie die Ausrichtungswinkel der Molekülketten 32 wird im Wesentlichen von der Leistungsfähigkeit des Extruders 10 bestimmt. Ferner können auf diese Weise auch unterschiedliche Kunststoffe verwendet werden.

So ist es auch möglich, dass mindestens eine Schicht 48 der mehrschichtigen Produktwandung 39 oder die einzige Schicht der einschichtigen Produktwandung 39 neben dem Material mit den ausgerichteten Molekülketten zusätzlich einen Füllstoff aus organischem oder anorganischem Material aufweist. Die Füllstoffe werden dem Material mit den ausgerichteten Molekülketten beigemischt, mit dem Ziel, die mechanischen Eigenschaften des schlauchförmigen Produkts zu verändern, um spezielle Kundenwünsche zu erfüllen. Dabei ist es auch möglich, dass mindestens eine vollständige Schicht der mehrschichtigen Produktwandung den Füllstoff aufweist. Der Füllstoff kann dabei faserförmig (z.B. aus Naturfasern oder Glasfasern) oder globular (z.B. aus mineralischen Stoffen) ausgebildet sein.

In einer weiteren nicht dargestellten Ausführungsform kann ein auf Umformtemperatur erhitzter metallischer Werkstoff mit Hilfe einer Strangpressvorrichtung in einem im Wesentlichen analogen Verfahren zu einem Rohr umgeformt werden. Im Unterschied zum Verfahren durch Extrusion wird hier der metallische Werkstoff als Block (und nicht als Granulat) in die Strangpressvorrichtung eingeführt. Beim Verarbeiten von metallischen Werkstoffen können mehrere Durchläufe bei Umformen des Materials nötig sein. Ansonsten gelten die gleichen Ergebnisse, wie sie mit den oben beschriebenen Vorrichtungen erzielt werden.

## Patentansprüche

1. Verfahren zum Umformen, wobei ein auf eine dem Verfahren zuträgliche Umformtemperatur erwärmtes Rohmaterial längs einer Vorschubrichtung (26) mindestens einmal durch eine Matrize (22) gedrückt oder gezogen wird, **dadurch gekennzeichnet, dass** während des Umformens und/oder nach dem Umformen die Matrize (22) oder zumindest Teilbereiche der Matrize (22) und/oder das Rohmaterial um eine in Vorschubrichtung (26) verlaufende Längsachse gedreht wird.

2. Verfahren nach Anspruch 1, **dadurch gekennzeichnet, dass** das Rohmaterial durch Drehen einer Wandung eines Führungszylinders (12) einer Umformvorrichtung (10) für das Rohmaterial verdreht wird.

3. Verfahren nach Anspruch 1 oder 2, **dadurch gekennzeichnet, dass** bei der Drehung der Matrize (22) und des Rohmaterials eine Relativbewegung zwischen der Matrize (22) und des Rohmaterials erzeugt wird.

4. Verfahren nach einem der vorhergehenden Ansprüche,
**dadurch gekennzeichnet, dass** beim Umformen Kunststoffe oder Metalle verarbeitet werden.

5. Verfahren nach einem der vorhergehenden Ansprüche,
**dadurch gekennzeichnet, dass** Molekülketten beziehungsweise Kristalle des Rohmaterials bevorzugt in einem Winkel größer 1°, insbesondere von 35° bis 60°, gegenüber der Längsachse (30) des umgeformten Rohmaterials ausgerichtet werden.

6. Verfahren nach einem der vorhergehenden Ansprüche,
**dadurch gekennzeichnet, dass** durch das Umformen rohr- oder schlauchförmige Produkte (28) hergestellt werden, wobei insbesondere die schlauchförmigen Produkte (28) eine mehrschichtige Produktwandung (39) aufweisen, wobei insbesondere die Ausrichtung der Molekülketten in den einzelnen Schichten der Produktwandung (39) unterschiedlich ist, und wobei insbesondere die Molekülketten in den einzelnen Schichten der Produktwandung (39) relativ zueinander entgegengesetzt ausgerichtet sind.

7. Verfahren nach einem der vorhergehenden Ansprüche,
**dadurch gekennzeichnet, dass** das Rohmaterial durch Leitschaufeln (46) in einem vorbestimmten Winkel zur Matrize (22) herangeführt wird.

8. Umformvorrichtung (10), insbesondere zur Durchführung des Verfahrens nach einem der vorhergehenden Ansprüche, die dazu eingerichtet ist, ein auf Umformtemperatur erwärmtes Rohmaterial längs einer Vorschubrichtung mindestens einmal durch eine Matrize (22) zu drücken, **dadurch gekennzeichnet, dass** die Umformvorrichtung (10) Mittel aufweist, um während des und/oder nach dem Umformen die Matrize (22) oder zumindest Teilbereiche der Matrize (22) und/oder das Rohmaterial um eine in Vorschubrichtung (26) verlaufende Längsachse zu drehen, insbesondere eine antreibbare und um die in Vorschubrichtung (26) verlaufende Längsachse drehbare Matrize (22).

9. Umformvorrichtung nach Anspruch 8, **dadurch gekennzeichnet, dass** mindestens eine Wandung in einer Führung (12) des Rohmaterials um die in Vorschubrichtung (26) verlaufende Längsachse drehbar ist.

10. Umformvorrichtung nach Anspruch 8 oder 9, **dadurch gekennzeichnet, dass** die Umformvorrichtung (10) zum gezielten Führen des Rohmaterials hin zur Matrize (22) Leitschaufeln (46) aufweist, wobei insbesondere die Leitschaufeln (46) in der Umformvorrichtung (10) rotieren.

11. Umformvorrichtung nach einem der Ansprüche 8 bis 10,
**dadurch gekennzeichnet, dass** rohr- oder schlauchförmige Produkte (28) herstellbar sind.

12. Umformvorrichtung nach einem der Ansprüche 8 bis 11,
**dadurch gekennzeichnet, dass** die Umformvorrichtung (10) dazu eingerichtet ist, eine mehrschichtige Produktwandung (39) der rohr- oder schlauchförmige Produkte (28) zu erzeugen.

13. Rohr- oder schlauchförmiges Produkt (28), das mit einem Verfahren gemäß der Ansprüche 1 bis 7 und/oder durch eine Umformvorrichtung (10) gemäß der Ansprüche 8 bis 12 herstellbar ist, **dadurch gekennzeichnet, dass** das rohr- oder schlauchförmige Produkt (28) aus Kunststoff oder Metall hergestellt ist und mindestens eine schichtförmige Produktwandung (39) aufweist, wobei die Ausrichtung von Molekülketten in der Produktwandung (39) von der Richtung der Längsachse abweicht.

14. Rohr- oder schlauchförmiges Produkt (28) nach Anspruch 13, **dadurch gekennzeichnet, dass** die Produktwandung (39) mehrschichtig ist, wobei insbesondere die Ausrichtungen von Molekülketten in wenigstens zwei Schichten der Produktwandung (39) voneinander abweichen, insbesondere relativ zueinander entgegengesetzt ausgerichtet sind.

15. Rohr- oder schlauchförmiges Produkt (28) nach Anspruch 13 oder 14, **dadurch gekennzeichnet, dass** mindestens eine Schicht der Produktwandung (39) neben dem Material mit den ausgerichteten Molekülketten zusätzlich einen Füllstoff aus organischem oder anorganischem Material aufweist, wobei insbesondere mindestens eine vollständige Schicht der mehrschichtigen Produktwandung (39) den Füllstoff aufweist und/oder insbesondere der Füllstoff faserförmig oder globular ausgebildet ist.
